# EUROPÄISCHE PATENTSCHRIFT

(11) **EP 0 644 426 B1**
(45) Veröffentlichungstag und Bekanntmachung des Hinweises auf die Patenterteilung: **06.05.2004**
(21) Anmeldenummer: 94113833.1
(22) Anmeldetag: 03.09.1994
(51) Int. Cl.: G01N 35/10, B01L 11/00, G01N 33/543

(54) **Analysengerät mit einer Vorrichtung zur Suspension von Partikeln und ein Verfahren zur Durchführung der Suspension**
Analyser with a device for suspending particles, and suspension method therefor
Analyseur comprenant un dispositif pour la suspension de particules, et méthode de suspension

(30) Priorität: 17.09.1993 CH 280093
(43) Veröffentlichungstag der Anmeldung: 22.03.1995
(73) Patentinhaber: F. HOFFMANN-LA ROCHE AG, 4002 Basel (CH)
(72) Erfinder: Knobel, Rolf, CH-6343 Rotkreuz (CH)
(74) Vertreter: Ventocilla, Abraham

(56) Entgegenhaltungen:
- EP-A- 0 131 259
- WO-A-91/16675
- DE-A- 3 242 460
- US-A- 4 803 050

## Beschreibung

Die vorliegende Erfindung betrifft ein Verfahren zur Suspension von Partikeln und eine Vorrichtung zur Durchführung des Verfahrens.

Die Erfindung eignet sich beispielsweise zur Suspension von magnetischen Mikropartikeln während der Reagenzzugabe in einer Bearbeitungsstation zur automatisierten Durchführung von DNA-Detektionen und Immunoassays, ist aber nicht auf diese Einsatzgebiete beschränkt.

Bei vielen Analysenverfahren wie z.B. auch bei den DNA-Detektionen und zur Durchführung von Immunoassays ist die Trennung von fester und flüssiger Phase mit anschliessendem Waschen der festen Phase notwendig.

Auf den letzten Separationsschritt im Waschverfahren folgt üblicherweise der Transport der Probe zu einer Bearbeitungsstation (beispielsweise dem Inkubator ), wo die Zugabe von Reagenzlösungen erfolgt. Auf konventionelle Weise wird die Zugabe derart durchgeführt, dass die Lösungen mit Hilfe einer Pipettierspitze in die Mitte des Reaktionsgefässes einpipettiert werden. Ein gutes Mischen von Reagenz und Festphase ist für den schnellen und effizienten Verlauf der anschliessenden chemischen Reaktion ( beispielsweise während der Inkubation) nötig. Um die Suspension der festen Phase möglichst vollständig durchzuführen, kann beim Stand der Technik nicht auf einen Schüttelvorgang verzichtet werden, wobei der Reaktionsbehälter oder die gesamte Bearbeitungsstation geschüttelt werden kann. Hierzu geeignete Vorrichtungen erfordern einen zusätzlichen technischen Aufwand, welcher mit Kosten verbunden ist und zudem die Gesamtanlage räumlich vergrössert. Auch geht ein derartiger Schüttelvorgang in die Gesamtbearbeitungszeit in negativer Weise mit ein.

Eine Möglichkeit, Partikel, die sich abgesetzt haben, zu resuspendieren, ist in der WO-A-91/16675 angegeben: Die Pipettiernadel wird während des Einspritzens herausgezogen und gleichzeitig kreisförmig bewegt, so dass die Nadelspitze eine helicale Bewegung ausführt und dadurch eine Rührwirkung erzielt wird. Nachteilig an dieser Lösung ist u.a., dass eine zusätzliche Bewegungsvorrichtung nötig ist, die an der Pipettiernadel angreift und die kreisförmige Bewegung erzeugt, wobei gleichzeitig und kontinuierlich Pufferlösung zugeführt wird. Es besteht dabei auch die Gefahr, dass Anhäufungen nicht vollständig aufgelöst werden, da sich z.B. magnetisch sedierbare Partikel konzentriert an bestimmten Wandbereichen absetzen, die durch die Position der Magnete beim Separieren bestimmt sind.

Der Erfindung liegt die Aufgabe zugrunde, ein Verfahren und eine Vorrichtung bereitzustellen, mit denen durch Zugabe einer bestimmten Menge einer Flüssigkeit in ein Reaktionsgefäss die zu suspendierenden Partikel ohne die oben beschriebenen Nachteile suspendiert werden können.

Die Aufgabe wird mit einem Verfahren gemäss Anspruch 1 und mit einer Vorrichtung gemäss Anspruch 6 gelöst. Die Ansprüche 2 bis 5 und 7 bis 10 definieren bevorzugte Ausführungsformen.

Die Partikel können in bezug auf die Mittellängsache an diametral gegenüberliegenden Wandbereichen des Reaktionsgefässes haften. Das ist beispielsweise dann der Fall, wenn die Partikel magnetische Mikropartikel sind und zuvor eine Trennung von fester und flüssiger Phase durch zwei sich diametral gegenüberliegende Magneten erfolgte.

Das Verfahren eignet sich nicht nur zur Suspension von Partikeln, die in bezug auf die Mittellängsachse an diametral gegenüberliegenden Wandbereichen abgelagert sind. Die Pipettiernadel kann, nachdem in einer ersten Position ein Teil des vorbestimmten Volumens der Reagenzflüssigkeit in das Reaktionsgefäss pipettiert wurde durch Rotation zu einer beliebigen zweiten Position in einem Abstand von der Mittellängsachse des Reaktionsgefässes verschoben werden, wo die dort abgelagerten Partikel durch Zugabe des restlichen Teilvolumens der Reagenzflüssigkeit suspendiert werden. Auch kann eine bereits im Reaktionsgefäss befindliche Lösung gut mit weiteren Lösungen vermischt werden.

Die durch die Erfindung erreichten Vorteile sind im wesentlichen darin zu sehen, dass durch die portionsweise Abgabe von Reagenzflüssigkeit an zwei unterschiedlichen Positionen eines Reaktionsgefässes eine Strömung im Reaktionsgefäss erzeugt wird, die die Suspension der festen Phase ausschliesslich durch das Einspritzen von Reagenz ermöglicht, so dass auf einen nachfolgenden Schüttelvorgang verzichtet werden kann. So kann durch die erfindungsgemässe Vorrichtung in Analysengeräten eine optimale Suspension von Partikeln während der Reagenzzugabe allein durch die Wahl eines geeigneten Steuerprogramms der Pipettiernadel erfolgen, so dass eine möglichst hohe Anzahl Proben pro Zeiteinheit bearbeitet werden kann. Erfindungsgemäss kann das Verfahren mit einem Analysengerät ausgeführt werden das folgende Komponenten enthält:
eine Pipettiervorrichtung mit einer Transporteinrichtung, die dazu dient, eine Pipettiernadel in drei zueinander senkrechten Richtungen zu bewegen,
wenigstens ein Reaktionsgefäss mit einer Mittellängsachse, wobei das Reaktionsgefäss die zu suspendierenden Partikel enthält,
wenigstens eine Bearbeitungsstation, in der das Reaktionsgefäss angeordnet werden kann, und an der eine bestimmte Menge eines Reagenzes durch die Pipettiernadel in das Reaktionsgefäss pipettierbar ist, wobei das Analysengerät dadurch gekennzeichnet ist, dass die Transporteinrichtung dazu eingerichtet ist, die Pipettiernadel im Reaktionsgefäss parallel zu und in einem bestimmten Abstand e von der Mittelachse des Reaktionsgefässes zu positionieren, sodass die Position der Pipettiernadel im Reagenzglas während der Pipettierung von Flüssigkeit unverändert bleibt.

Der Abstand ist der Bereich zwischen der Mittellängsachse des Reaktionsgefässes und der Reaktionsgefäss-Wand.

Bearbeitüngsstationen können im Rahmen der vorliegenden Erfindung Stationen in Inkubatoren, Wascheinrichtungen und dergleichen sein.

Partikel sind im Rahmen der vorliegenden Erfindung Niederschläge von schwerlöslichen Verbindungen, magnetische Micropartikel, die als Träger in Festphasenimmunoassays verwendet werden, magnetische Microbeads und dergleichen. Vorzugsweise sind die Ablagerungen magnetische Microbeads.

Pipettiernadeln sind im Rahmen der vorliegenden Erfindung vorteilhafterweise derart gestaltet, dass ein Durchstossen eines Reaktionsgefässdeckels möglich ist.

Ein Ausführungsbeispiel der Erfindung wird im folgenden anhand der beiliegenden Zeichnungen beschrieben. Es zeigen:
Fig. 1 eine perspektivische Gesamtdarstellung eines erfindungsgemässen Analysengerätes,
Fig. 2 - 5 das erfindungsgemässe Verfahren zur Suspension von Partikeln,
Fig. 6 in axonometrischer Darstellung die erfindungsgemässe Pipettenführung gemäss den Figuren 2 bis 5,
Fig. 7 eine weitere Möglichkeit einer erfindungsgemässen Pipettenführung.

Beispielhaft wird ein Analysengerät zur automatisierten Durchführung von Festphasenimmunoassays vorgestellt, bei dem die feste Phase aus magnetischen Mikropartikeln besteht und die Trennung von fester und flüssiger Phase mit Hilfe von Permanentmagneten erfolgt. Nach der Trennung sind die Mikropartikel an zwei diametral gegenüberliegenden Wandungsbereichen des Reaktionsgefässes niedergeschlagen.

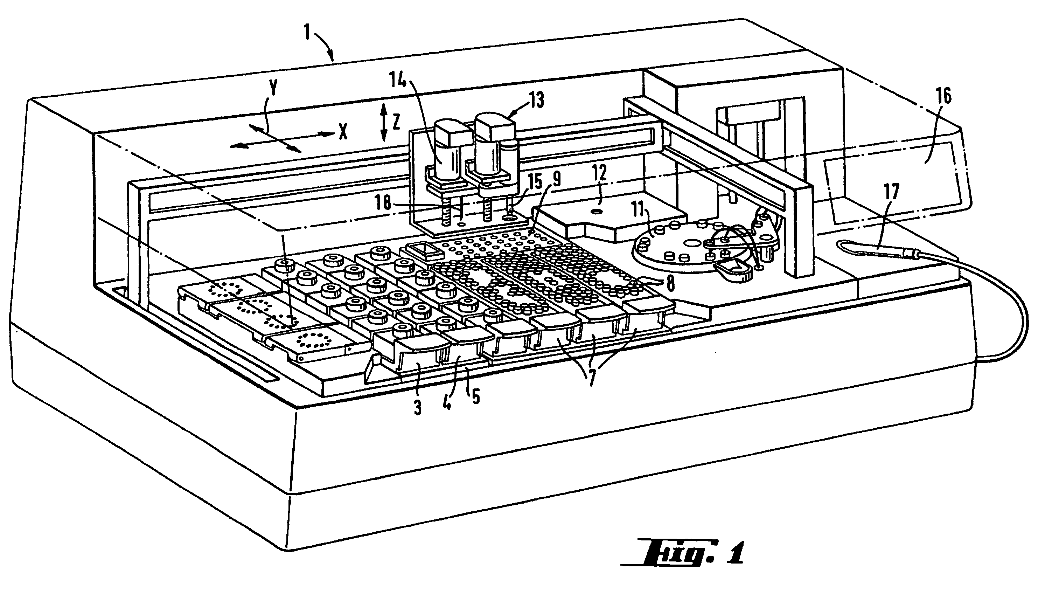

In Fig. 1 ist ein Analysengerät 1 dargestellt, welches beispielsweise zur Durchführung von DNA-Detektionen ausgelegt ist. In dem Analysengerät 1 sind enthalten: Einrichtungen zur Durchführung obengenannter DNA-Detektionen, hier z.B. zwei Racks 3, 4 mit Reagenzien auf einem Schütteltisch 5, drei Racks 7 mit Einwegreagenzbehältern 8, ein temperierbarer Inkubator 9, eine Wascheinrichtung 11 und ein Photometer 12.

Der Proben- und Reagenzientransfer sowie der Reaktionsgefässe-Transfer wird durch eine im x-y-Koordinatensystem bewegbare Transporteinrichtung 13 ermöglicht, welche eine Pipettiereinrichtung 14 mit einer Pipettiernadel 18 sowie einen Reaktionsgefässegreifer 15, beide in z-Richtung bewegbar, aufweist.

Zum Reagenzientransfer wird die Pipettiernadel 18 zu einem Rack 3, 4 geführt. Dort wird Reagenz abgesaugt. Anschliessend wird die Pipettiernadel 18 zu einem Reaktionsgefäss 8 geführt, wo die Reagenzabgabe erfolgt.

Ueber eine Bedienebene 16 und / oder einen Barcode - Lesegriffel 17 können Prozessparameter eingegeben werden. Die CPU steuert und koordiniert sämtliche Prozessvorgänge.

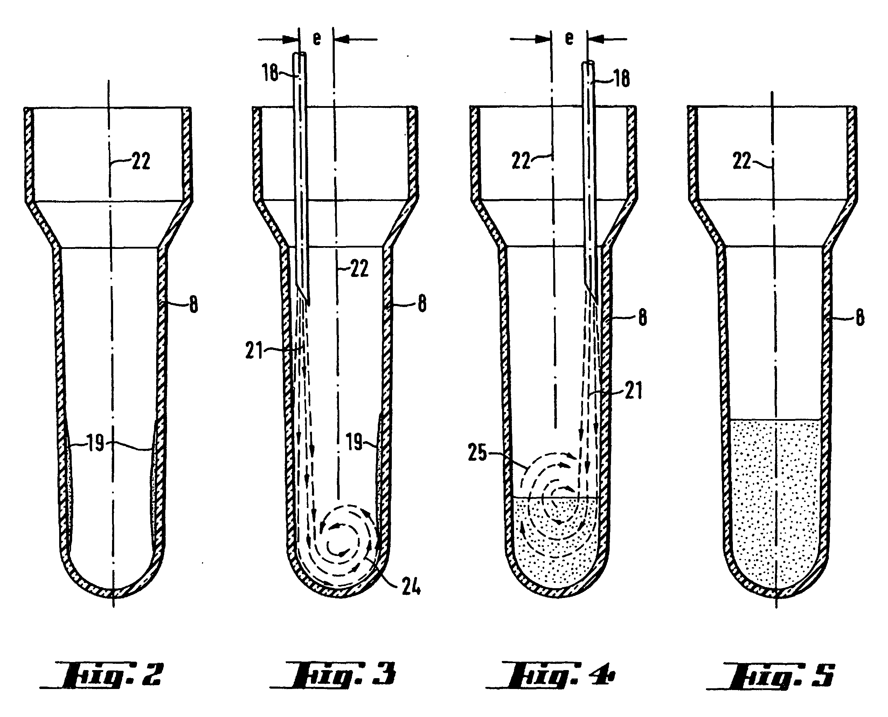

Fig. 2 - 5 zeigt das erfindungsgemässe Verfahren zur Suspension magnetischer Mikropartikel.

Fig. 2 zeigt das Reaktionsgefäss 8 mit der Mittellängsachse 22. Die Partikel 19 haften an in bezug auf die Mittellängsache 22 diametral gegenüberliegenden Innenwänden des Reaktionsgefässes 8.

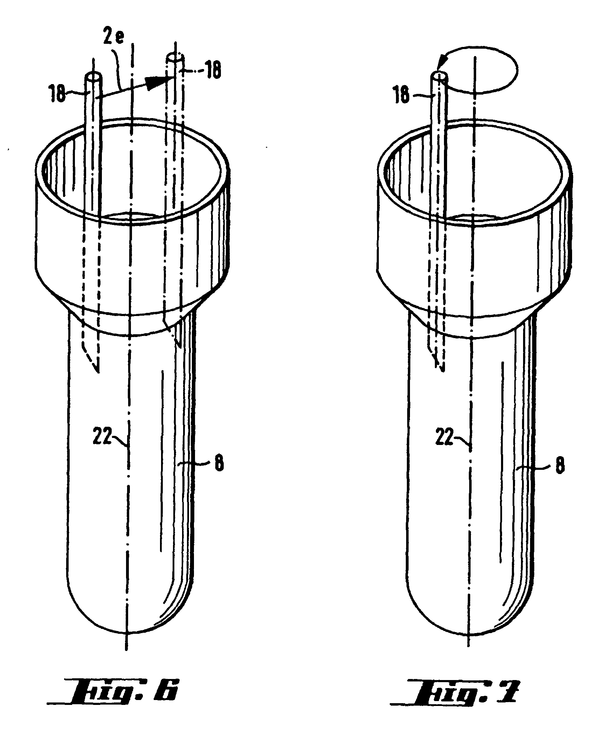

Fig. 3 zeigt die Pipettiernadel 18 in der ersten Position im Abstand e von der Mittellängsachse 22. Hier wird ein Teil des vorbestimmten Volumens der Reagenzflüssigkeit 21 eingespritzt. Der entstehende Wirbel 24 ist schematisch angedeutet.

Fig. 4 zeigt die Pipettiernadel 18 in der zweiten Position im Abstand e von der Mittellängsachse 22. Hier wird der Rest des vorbestimmten Volumens der Reagenzflüssigkeit 21 eingespritzt. Der entstehende Wirbel 25 ist schematisch angedeutet. Man erkennt die inverse Drehrichtung.

Fig. 5 zeigt schematisch resuspendierte Partikel.

Die Verstellung der Pipettiernadel 18 kann in einfacher Weise mittels der Transporteinrichtung 13 und mit einem entsprechenden Steuerprogramm (x-y-Verstellung) durchgeführt werden.

Fig. 6 zeigt die lineare Verschiebung der Pipettiernadel 18 an zwei in bezug auf die Mittellängsachse 22 diametral gegenüberliegende Positionen. Der Gesamtverschiebeweg beträgt 2e.

Fig. 7 zeigt die rotierende Verschiebung der Pipettiernadel 18 an in bezug auf die Mittellängsachse 22 beliebige Positionen im Abstand e.

## Patentansprüche

1. Verfahren zur Suspension von Partikeln, die sich in einem Reaktionsgefäss befinden, wobei ein vorbestimmtes Volumen einer Reagenzflüssigkeit mittels einer durch eine Transporteinrichtung bewegbaren Pipettiernadel in das Reaktionsgefäss gegeben wird,
**dadurch gekennzeichnet, dass**
die Pipettiernadel (18) durch die Transporteinrichtung (13) zu einer ersten Position in einem ersten Abstand (e). von der Mittellängsachse (22) des Reaktionsgefässes (8) gebracht wird,
mit der Pipettiernadel (18) an dieser ersten Position ein Teil des vorbestimmten Volumens der Reagenzflüssigkeit (21) in das Reaktionsgefäss (8) unter Bildung eines ersten Wirbels (24) eingespritzt wird, wobei die Position der Pipettiernadel (18) im Reagenzglas (8) während des Einspritzens unverändert bleibt,
die Pipettiernadel (18) durch die Transporteinrichtung (13) zu einer zweiten Position in einem zweiten Abstand (e) von der Mittellängsachse (22) des Reaktionsgefässes (8) gebracht wird, und
mit der Pipettiernadel (18) an dieser zweiten Position der restliche Teil des vorbestimmten Volumens der Reagenzflüssigkeit (21) in das Reaktionsgefäss (8) unter Bildung eines zweiten Wirbels (25) eingespritzt wird, der in bezug auf die Drehrichtung des ersten Wirbels (24) die entgegengesetzte Drehrichtung hat.

2. Verfahren zur Suspension von Partikeln gemäss Anspruch 1, **dadurch gekennzeichnet, dass** in Bezug auf die Mittelachse (22) des Reaktionsgefässes (8) die zweite Position diametral gegenüber der ersten Position liegt.

3. Verfahren zur Suspension von Partikeln gemäss Anspruch 2, **dadurch gekennzeichnet, dass** die erste bzw. die zweite Position in der Nähe von je einem Bereich der Seitenwand des Reaktionsgefässes (8) liegen, an welchem zu suspendierenden Partikel (19) anhaften.

4. Verfahren zur Suspension gemäss einem der Ansprüche 1 bis 3, **dadurch gekennzeichnet, dass** sich erste und zweite Position in einem im wesentlich gleichen Abstand (e) von der Mittelachse befinden.

5. Verfahren zur Suspension von Partikeln gemäss einem der Ansprüche 1-4, **dadurch gekennzeichnet, dass** die Partikel (19) magnetische Mikropartikel sind.

6. Vorrichtung zur Durchführung des Verfahrens gemäss Anspruch 1, mit folgenden Komponenten:
eine Pipettiervorrichtung (14) mit einer Transporteinrichtung (13), die dazu dient, eine Pipettiernadel (18) in drei zueinander senkrechten Richtungen (x,y,z) zu bewegen,
wenigstens ein Reaktionsgefäss (18) das eine im wesentlichen zylindrische Seitenwand, eine Mittellängsachse und eine im wesentliche sphärische Bodenwand hat und die zu suspendierenden Partikel enthält,
wenigstens eine Bearbeitungsstation, in der das Reaktionsgefäss angeordnet werden kann, und an der eine bestimmte Menge eines Reagenzes durch die Pipettiernadel in das Reaktionsgefäss pipettierbar ist, wobei
die Transporteinrichtung (13) dazu eingerichtet ist, die Pipettiernadel (18) im Reaktionsgefäss (8) in einer ersten Position zu positionieren, an der ein Teil der vorbestimmten Menge der Reagenzflüsssigkeit abgegeben wird, und anschliessend in einer zweiten Position zu positionieren, an der der restliche Teil der Reagenzflüsssigkeit abgegeben wird, wobei in der ersten und in der zweiten Position die Pipettiernadel (18) parallel zu und in einem bestimmten Abstand (e) von der Mittelachse (22) des Reaktionsgefässes (8) angeordnet ist.

7. Vorrichtung gemäss Anspruch 6, **dadurch gekennzeichnet, dass** in der ersten und in der zweiten Position die Pipettiernadel zwischen der Mittellängsachse (22) des Reaktionsgefässes (8) und der Wand des Reaktionsgefässes (8) angeordnet ist.

8. Vorrichtung gemäss Anspruch 6, **dadurch gekennzeichnet, dass** in Bezug auf die Mittelachse (22) des Reaktionsgefässes (8) die zweite Position diametral gegenüber der ersten Position liegt.

9. Vorrichtung gemäss Anspruch 6, **dadurch gekennzeichnet, dass** die erste bzw. die zweite Position in der Nähe von je einem Bereich der Seitenwand des Reaktionsgefässes (8) liegen, an welchem zu suspendierenden Partikel (19) anhaften.

10. Vorrichtung gemäss Ansprüch 9, **dadurch gekennzeichnet, dass** die Partikel (19) magnetische Mikropartikel sind.

## Claims

1. Process for suspending particles which are located in a reaction vessel, wherein a predetermined volume of a reagent liquid is added to the reaction vessel by means of a pipetting needle which can be moved by a transport device,
**characterised in that**
the pipetting needle (18) is brought by the transport device (13) to a first position at a first distance (e) from the central longitudinal axis (22) of the reaction vessel (8),
with the pipetting needle (18) in this first position a part of the predetermined volume of the reagent liquid (21) is injected into the reaction vessel (8) forming a first eddy (24), wherein the position of the pipetting needle (18) in the reagent glass (8) remains unchanged during the injection,
the pipetting needle (18) is brought to a second position at a second distance (e) from the central longitudinal axis (22) of the reaction vessel (8) by the transport device (13), and
with the pipetting needle (18) at this second position the remaining part of the predetermined volume of the reagent liquid (21) is injected into the reaction vessel (8) forming a second eddy (25) which rotates in the opposition direction to the direction of rotation of the first eddy (24).

2. Process for suspending particles as claimed in claim 1, **characterised in that** with respect to the central axis (22) of the reaction vessel (8) the second position lies diametrically opposite the first position.

3. Process for suspending particles as claimed in claim 2, **characterised in that** the first and the second position lie in the proximity of a respective region of the second wall of the reaction vessel (8) to which adhere particles (19) which are to be suspended.

4. Suspension process as claimed in any one of claims 1 to 3, **characterised in that** the first and second position are located at a substantially equal distance (e) from the central axis.

5. Process for suspending particles as claimed in any one of claims 1 to 4, **characterised in that** the particles (19) are magnetic microparticles.

6. Device for carrying out the process as claimed in claim 1, having the following components: a pipetting device (14) having a transport device (13) which serves to move a pipetting needle (18) in three mutually perpendicular directions (x, y, z),
at least one reaction vessel (18) which has a substantially cylindrical side wall, a central longitudinal axis and a substantially spherical base wall and contains the particles which are to be suspended,
at least one processing station in which the reaction vessel can be disposed and on which a specific quantity of a reagent can be pipetted through the pipetting needle into the reaction vessel, wherein
the transport device (13) is arranged to position the pipetting needle (18) in the reaction vessel (8) in a first position, in which a part of the predetermined quantity of the reagent liquid is discharged, and subsequently to position it in a second position, in which the remaining part of the reaction liquid is discharged, wherein in the first and in the second position the pipetting needle (18) is disposed parallel to and at a specific distance (e) from the central axis (22) of the reaction vessel (8).

7. Device as claimed in claim 6, **characterised in that** in the first and in the second position the pipetting needle is disposed between the central longitudinal axis (22) of the reaction vessel (8) and the wall of the reaction vessel (8).

8. Device as claimed in claim 6, **characterised in that** with respect to the central axis (22) of the reaction vessel (8) the second position lies diametrically opposite the first position.

9. Device as claimed in claim 6, **characterised in that** the first and the second position lie in the proximity of a respective region of the side wall of the reaction vessel (8) to which adhere particles (19) which are to be suspended.

10. Device as claimed in claim 9, **characterised in that** the particles (19) are magnetic microparticles.

## Revendications

1. Procédé pour la suspension de particules qui se trouvent dans un réacteur, un volume prédéterminé d'un liquide réactif étant placé dans le réacteur au moyen d'une aiguille à pipeter déplaçable à l'aide d'un dispositif de transport, **caractérisé en ce que** :
- l'aiguille à pipeter (18) est amenée par le dispositif de transport (13) vers une première position, à un premier écartement (e) de l'axe longitudinal central (22) du réacteur (8),
- au moyen de l'aiguille à pipeter (18), au niveau de cette première position, une partie du volume prédéterminé du liquide réactif (21) est injectée dans le réacteur (8) avec formation d'un premier tourbillon (24), la position de l'aiguille à pipeter (18) dans le tube à essais (8) restant inchangée pendant l'injection,
- l'aiguille à pipeter (18) est amenée par le dispositif de transport (13) vers une deuxième position, à un deuxième écartement (e) de l'axe longitudinal central (22) du réacteur (8), et
- au moyen de l'aiguille à pipeter (18), au niveau de cette deuxième position, la partie restante du volume prédéterminé du liquide réactif (21) est injectée dans le réacteur (8) avec formation d'un deuxième tourbillon (25) qui a le sens de rotation inverse par rapport à celui du premier tourbillon (24).

2. Procédé pour la suspension de particules selon la revendication 1, **caractérisé en ce que** la deuxième position est diamétralement opposée à la première position en ce qui concerne l'axe central (22) du réacteur (8).

3. Procédé pour la suspension de particules selon la revendication 2, **caractérisé en ce que** la première ou la deuxième position se trouve chacune à proximité d'une zone de la paroi latérale du réacteur (8) à laquelle adhèrent les particules (19) à mettre en suspension.

4. Procédé pour la suspension selon l'une des revendications 1 à 3, **caractérisé en ce que** la première et la deuxième position se trouvent à un/des écartement(s) essentiellement égal(aux) de l'axe central.

5. Procédé pour la suspension de particules selon l'une des revendications 1 à 4, **caractérisé en ce que** les particules (19) sont des microparticules magnétiques.

6. Dispositif pour l'exécution du procédé selon la revendication 1 comprenant les composants suivants :
- un dispositif à pipeter (14) comportant un dispositif de transport (13) qui sert à déplacer une aiguille à pipeter (18) dans trois directions (x, y, z) verticales les unes par rapport à autres,
- au moins un réacteur (8) qui possède une paroi latérale essentiellement cylindrique, un axe longitudinal central et une paroi de fond essentiellement sphérique et qui contient des particules à mettre en suspension,
- au moins une station de traitement dans laquelle le réacteur peut être disposé et au niveau de laquelle une certaine quantité d'un réactif peut être pipetée dans le réacteur à l'aide de l'aiguille à pipeter, le dispositif de transport (13) étant installé pour placer l'aiguille à pipeter (18), située dans le réacteur (8), dans une première position au niveau de laquelle une partie de la quantité prédéterminée de liquide réactif est déposée et, ensuite, pour la placer dans une deuxième position au niveau de laquelle la partie restante du liquide réactif est déposée, dans la première et dans la deuxième position, l'aiguille à pipeter (18) étant disposée de manière parallèle à l'axe central (22) du réacteur (8) et à un/des écartement(s) précis de celui-ci.

7. Dispositif selon la revendication 6, **caractérisé en ce que**, dans la première et dans la deuxième position, l'aiguille à pipeter est disposée entre l'axe longitudinal central (22) du réacteur (8) et la paroi du réacteur (8).

8. Dispositif selon la revendication 6, **caractérisé en ce que** la deuxième position est diamétralement opposée à la première position, en ce qui concerne l'axe central (22) du réacteur (8).

9. Dispositif selon la revendication 6, **caractérisé en ce que** la première ou la deuxième position se trouve chacune à proximité d'une zone de la paroi latérale du réacteur (8) à laquelle adhèrent les particules (19) à mettre en suspension.

10. Dispositif selon la revendication 9, **caractérisé en ce que** les particules (19) sont des microparticules magnétiques.
